# EUROPEAN PATENT SPECIFICATION

(11) **EP 1 332 657 B1**
(45) Date of publication and mention of the grant of the patent: **09.08.2006**
(21) Application number: 02102782.6
(22) Date of filing: 17.12.2002
(51) Int. Cl.: A01B 59/00, A01B 59/041

(54) **Strut for a hitch device for attaching farm implements to a tractor**
Strebe für die Anhängevorrichtung eines Ackerschleppers
Barre pour le dispositif d'attelage d'un tracteur agricole

(30) Priority: 01.02.2002 IT BO20020060
(43) Date of publication of application: 06.08.2003
(73) Proprietor: CNH Italia S.p.A., 41100 Modena (IT)
(72) Inventor: Casali, Paolo, 41100, Modena (IT); Brooks, Paul John, 41100, Modena (IT)
(74) Representative: Vandenbroucke, Alberic

(56) References cited:
- DE-B- 1 238 706
- GB-A- 647 622
- GB-A- 2 103 064
- US-A- 2 844 397
- US-A- 4 418 935
- US-A- 6 056 069

## Description

The present invention relates to hitch devices, and more specifically to such devices for attaching farm implements to a tractor. In particular, the present invention relates to a strut for a farm implement hitch device.

So-called "three-point hitches" normally comprise a top link and two bottom arms articulated to the tractor frame whereby each bottom arm is connected to a respective hydraulic lifting device. A farm implement, such as a plow or ripper, is fixed by known means to a three-point hitch of the above type.

Hitches of the above type allow the bottom arms to swing laterally when the tractor is moving. Particularly during on-highway transfer and when the implement is raised, lateral swing of the bottom arms is extremely dangerous, and may result in serious damage and/or personal injury caused by collision with the implement and/or hitch components. In such conditions, therefore, steps should be taken to ensure that the hitch and attached implement swing as little as possible. To this end, side struts of a fixed length are provided which operate on the bottom arms of the hitch.

On the other hand, when operating on a field, the strut should act as a stabilizer, since under these conditions it is often necessary to allow the implement to float to a certain extent. In other words, when actually working, it is often preferable to employ, as opposed to an overly rigid implement towing system, one allowing the implement to swing to a certain extent on encountering obstacles (such as stones) in the field.

For this purpose, stabilizing struts have been proposed which are connected, at one end, to the tractor frame, and are fixed at the other end to one of the bottom three-point hitch arms.

Stabilizing struts of this sort provide, in fact, for bracing the implement towing system, e.g. during on-highway transfer of the tractor, while at the same time allowing the three-point hitch and attached implement to swing to a certain extent when working on the field.

The stabilizing struts employed so far, however, fail to provide for reliable adjustment of the degree of rigidity of the implement towing system.

A strut according to the preamble of claim 1 is known from US-A-2 844 397.

It is therefore an object of the present invention to provide a reliable strut having characteristics other than those of similar currently marketed devices.

According to the present invention, there is provided a strut for a farm implement hitch device, as claimed in Claim 1.

Though reference is made in the following description to use of the strut according to the present invention as a stabilizing strut for preventing lateral swing of the hitch, it may be used for replacing other components of the three point hitch which need adjustment. In the latter case, the floating capability may require to be eliminated (see below) . The strut also may be used on both a rear and front hitch device.

A non-limiting embodiment of the present invention will now be described by way of example with reference to the accompanying drawings, in which:
Figure 1 shows a strut in accordance with the present invention connected at one end to a tractor frame, and at the other to a bottom arm of a three-point hitch;
Figure 2 shows a side view of the Figure 1 strut;
Figure 3 shows a longitudinal section along line A-A of the Figure 1, 2 strut; and
Figure 4 shows a front view of the strut as seen in Figures 1-3.

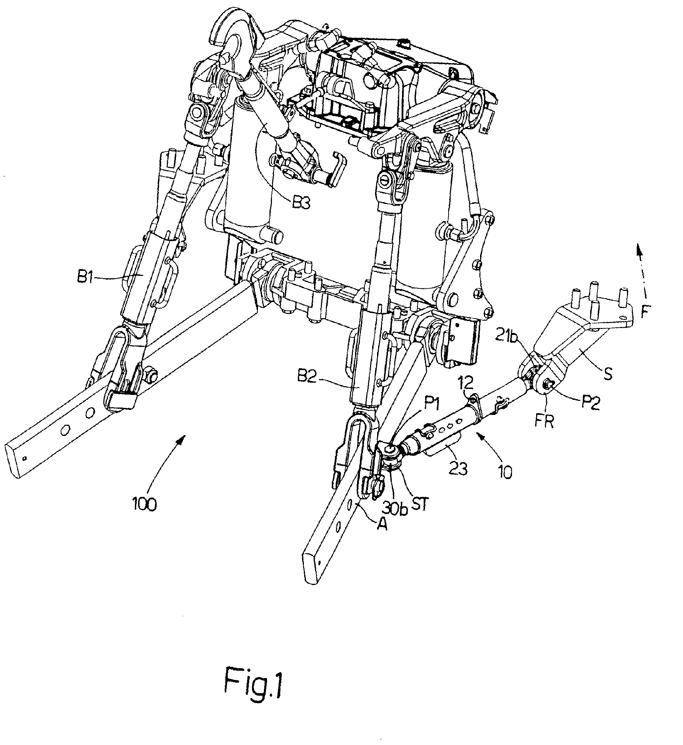

In the following disclosure, only the parts in Figure 1 essential to understanding the invention will be described, any irrelevant parts being omitted.

As shown in Figure 1, a strut 10 in accordance with the present invention is associated with a three-point hitch device 100 for a farm implement (not shown) towed by an agricultural tractor (not shown).

Strut 10 is fitted by known means at one end to a bottom arm A of hitch device 100, and is supported at the other end by a supporting device S screwed to a frame F (not shown) of the tractor. More specifically, in the Figure 1 embodiment, strut 10 is hinged by a pin P1 at a first end to a bracket ST integral with arm A, and is hinged by a pin P2 at a second end to a fork FR integral with support S.

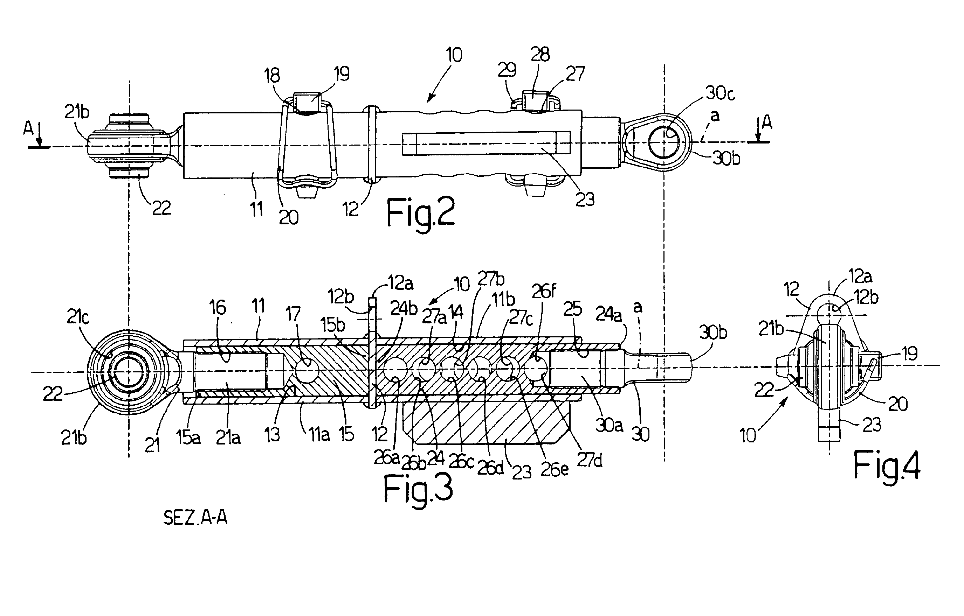

As shown in Figures 2-4, strut 10 comprises a substantially tubular outer body 11. Tubular outer body 11 is divided by a wall 12 into two sleeves 11a, 11b, each having a respective cavity 13, 14. Outer body 11 may be formed by welding sleeves 11a and 11b to wall 12, which may comprise a projecting portion 12a in which an opening 12b is formed for housing a pin 19 (see below).

As shown in Figure 3, cavity 13 houses a tubular member 15, at a first end 15a of which is formed a threaded seat 16 extending in the direction defined by a longitudinal axis of symmetry (a). Tubular member 15 also comprises a through hole 17 crosswise to axis (a). As seen in the Figure 2 and 3 configuration, a second end 15b of tubular member 15 rests against wall 12, and the transverse through hole 17 is aligned with a through hole 18 (Figure 2) in outer body 11, so that pin 19 need simply be inserted inside coaxial holes 18 and 17 to connect tubular member 15 integrally to outer body 11. Pin 19 is advantageously provided with a substantially U-shaped spring member 20 for preventing, in known manner, accidental withdrawal of pin 19 from holes 17, 18. As stated, when not inserted inside holes 17 and 18, pin 19 may be housed inside opening 12a.

A threaded shank 21a of a rod 21 is screwed inside threaded seat 16. The rod 21 further comprises a head 21b having a seat 21c for housing a spherical joint 22 into which pin P2 (Figure 1) is inserted, as stated, to connect one end of strut 10 integrally to support S.

At the end near the spherical joint 22, therefore, by lifting spring member 20 and removing pin 19 from through holes 17, 18, tubular member 15 is allowed to float freely inside cavity 13. This capability is advantageously employed in certain operating modes of the tractor, as when working on a field.

In a similar manner, cavity 14 in sleeve 11b houses a tubular member 24. At a first end 24a of said member 24 a threaded seat 25 is formed which extends in the direction defined by longitudinal axis of symmetry (a). Tubular member 24 also comprises a number of through holes 26a-26f crosswise to axis (a). As seen in the Figure 2 and 3 configuration, a second end 24b of tubular member 24 rests against wall 12, and transverse through hole 26f is aligned with a through hole 27 (Figure 2) forming part of a series of holes 27a-27d formed in sleeve 11b, so that a pin 28 (Figure 2) need simply be inserted inside coaxial through holes 26f and 27d (in the Figure 3 example) to connect tubular member 24 integrally to outer body 11. Holes 26 differ in number from holes 27, and the series of holes 26 has a different spacing from that of the series of holes 27, increasing the number of positions that tubular member 24 may take up relative to outer body 11.

Pin 28 is also advantageously provided (Figure 2) with a substantially U-shaped spring member 29 (identical with spring member 20) for preventing, in known manner, accidental withdrawal of pin 28 from coaxial, aligned through holes.

As shown in Figure 3, transverse holes 26a-26f formed in tubular member 24 and aligned along axis (a), through holes 27a-27d formed in sleeve 11b, and pin 28 form a system for rapidly adjusting the position of tubular member 24 with respect to wall 12 along axis (a). Obviously, adjusting the position of tubular member 24 along axis (a) results in a variation of the overall length of strut 10.

Accordingly, at the pin P1 end (Figure 1), by lifting spring member 29 and removing pin 28 from through holes 26f, 27d, tubular member 24 can be shifted axially, and one of holes 27a-27d (in sleeve 11b) in combination with one of the other holes 26a-26e can be used to selectively and rapidly adjust the axial position of tubular member 24 by sliding it inside cavity 14.

A threaded shank 30a of a rod 30 is screwed inside threaded seat 25. Rod 30 further comprises a head 30b having a seat 30c into which pin P1 (Figure 1) is inserted to fix the other end of strut 10 to bracket ST, which, as already mentioned, is integral with arm A of hitch device 100.

A finer length adjustment of strut 10 can be made by rotating tubular members 15, 24 (connected integrally to outer body 11 by respective pins 19, 28) with respect to rods 21, 30 using a plate 23 integral with outer body 11. In other words, once strut 10 is mounted, the user can further adjust the length of strut 10 by manually gripping plate 23 and rotating it about axis (a) together with outer body 11 and tubular members 15, 24. This serves to preload strut 10 and eliminate any slack caused by using only pin 28 as a discrete adjustment member.

To be able to lengthen or shorten strut 10 by rotation of the outer body 11 in the one or other sense, shanks 21a and 30a of rods 21 and 30 have oppositely directed threads. The same applies to the respective nut screws inside threaded seats 16 and 25.

Operation of strut 10 according to the present invention is easily deducible from the foregoing description. The main advantages of strut 10 when used as a stabilizing strut according to the present invention are as follows:
- fast, selective adjustment of the axial length of the strut by means of a number of through holes 26a-26f in tubular member 24, and a number of through holes 27a-27d in sleeve 11b;
- continuous fine adjustment of the length of the strut at both ends with respect to wall 12 by means of two rods 21, 30 with respective threaded shanks 21a, 30a;
- tubular member 15 can be allowed to float inside cavity 13 by lifting spring member 20 and removing pin 19, so that device 100 is free to swing, obviously within given limits, when required;
- strut 10 can be preloaded using the fine-adjustment system to eliminate any slack caused by discrete adjustment using pin 28; and
- the degree of float can be adjusted according to the type of work to be performed by the implement attached to device 100, by on the one hand allowing float on one side of the strut and on the other hand setting a length at the other side.

In embodiments not shown, strut 10 may advantageously replace the lifting arms B1, B2 (Figure 1) which are connected to the lower arms A and which also require a length adjustment mechanism. Obviously, for such an arrangement, the float condition would not be required as the arms A otherwise would fall onto the ground. Comparably, the principles of strut 10 also could be applied to top link B3.

## Claims

1. A strut (10) for a hitch device (100) for attaching farm implements to a tractor; the strut (10) being substantially symmetrical with respect to a longitudinal axis of symmetry (a), and comprising a system for adjusting its length along said axis (a) comprising two infinite length adjustment devices (16, 21a; 25, 30a); said two infinite length adjustment devices (16, 21a; 25, 30a) being located on opposite sides of a dividing member (12) positioned crosswise to said axis (a); **characterized in that** said system further comprises discrete length adjustment means (26a-26f, 27a-27d, 28).

2. A strut (10) according to claim 1, **characterized in that** said strut (10) is a stabilizing strut (10), and wherein one of said two infinite length adjustment devices (16, 21a; 25, 30a) can float.

3. A strut (10) according to claim 1 or 2, **characterized in that** it comprises a first sleeve (11a) and a second sleeve (11b) separated by the dividing member (12); said first sleeve (11a) housing a first tubular member (15) comprising a first infinite length adjustment device (16, 21a); and said second sleeve (11b) housing a second tubular member (24) comprising a second infinite length adjustment device (25, 30a).

4. A strut (10) according to claim 3, **characterized in that** said strut (10) is a stabilizing strut (10); said first tubular member (15) being able to float freely inside said first sleeve (11a).

5. A strut (10) according to claim 4, **characterized in that** said first tubular member (15) selectively can be fixed to said first sleeve (11a) by fastening means (17, 18, 19).

6. A strut (10) according to any of claims 3 to 5, **characterized in that** the position of said second tubular member (24) inside said second sleeve (11b) is adjustable axially and discretely by fastening means (26a-26f, 27a-27d, 28).

7. A strut (10) according to any of claims 3 to 6, **characterized in that** said first infinite length adjustment device (16, 21a) comprises an opposite thread to that of said second infinite length adjustment device (25, 30a).

8. A strut (10) according to claim 7, **characterized in that** at least one of said sleeves (11a, 11b) comprises a grip member (23) integral therewith; said member (23) facilitating rotation of said sleeves (11a, 11b) with respect to said axis (a).

9. A strut (10) according to claims 5 or 6, or any claim dependent therefrom, **characterized in that** said fastening means (19; 28) are provided with elastic means (20; 29) for preventing accidental withdrawal of the fastening means from their respective seats.

10. A strut (10) according to claim 3 and any claim dependent therefrom, **characterized in that** the first infinite length adjustment device (16, 21a) comprises a first seat (21c) for a spherical joint (22), and the second infinite length adjustment device (25, 30a) comprises a second seat (30c); the first seat (21c) and the second seat (30c) each housing a respective pin (P2, P1).

## Patentansprüche

1. Strebe (10) für eine Anhängevorrichtung (100) zur Befestigung von landwirtschaftlichen Arbeitsgeräten an einem Traktor, wobei die Strebe (10) im Wesentlichen symmetrisch zu einer Symmetrie-Längsachse (a) ist und ein System zur Einstellung seiner Länge entlang dieser Achse (a) umfasst, mit zwei eine kontinuierliche Längeneinstellung ermöglichenden Einrichtungen (16, 21 a; 25, 30a), wobei die eine kontinuierliche Längeneinstellung ermöglichenden Einrichtungen (16, 21a; 25, 30a) auf entgegengesetzten Seiten eines Unterteilungselementes (12) angeordnet sind, das quer zu der Achse (a) angeordnet ist,
**dadurch gekennzeichnet, dass** das System weiterhin diskrete Längeneinstelleinrichtungen (26a-26f, 27a-27d, 28) umfasst.

2. Strebe (10) nach Anspruch 1, **dadurch gekennzeichnet, dass** die Strebe (10) eine Stabilisierungsstrebe (10) ist, wobei eine der zwei eine kontinuierliche Längeneinstellung ermöglichenden Einrichtungen (16, 21a; 25, 30a), schwimmen kann.

3. Strebe (10) nach Anspruch 1 oder 2, **dadurch gekennzeichnet, dass** sie eine erste Hülse (11a) und eine zweite Hülse (11b) umfasst, die durch das Unterteilungselement (12) getrennt sind, wobei die erste Hülse (11a) ein erstes rohrförmiges Bauteil (15) aufnimmt, das eine erste kontinuierliche Längeneinstelleinrichtung (16, 21a) bildet; und die zweite Hülse (11b) ein zweites rohrförmiges Bauteil (24) aufnimmt, das eine zweite kontinuierliche Längeneinstelleinrichtung (25, 30a) bildet.

4. Strebe (10) nach Anspruch 3, **dadurch gekennzeichnet, dass** die Strebe (10) eine Stabilisierungsstrebe (10) ist, wobei das erste rohrförmige Bauteil (15) in der Lage ist, frei im Inneren der ersten Hülse (11a) zu schwimmen.

5. Strebe (10) nach Anspruch 4, **dadurch gekennzeichnet, dass** das erste rohrförmige Bauteil (15) selektiv an der ersten Hülse (11a) durch Befestigungseinrichtungen (17, 18, 19) befestigbar ist.

6. Strebe (10) nach einem der Ansprüche 3 bis 5, **dadurch gekennzeichnet, dass** die Position des zweiten rohrförmigen Bauteils (24) im Inneren der zweiten Hülse (11b) in Axialrichtung und in diskreten Schritten durch Befestigungseinrichtungen (26a-26f, 27a-27d, 28) einstellbar ist.

7. Strebe (10) nach einem der Ansprüche 3 bis 6, **dadurch gekennzeichnet, dass** die erste eine kontinuierliche Längeneinstellung ermöglichende Einrichtung (16, 21a) ein gegenläufiges Gewinde zu dem Gewinde der zweiten eine kontinuierliche Längeneinstellung ermöglichenden Einrichtung (25, 30a) aufweist.

8. Strebe (10) nach Anspruch 7, **dadurch gekennzeichnet, dass** zumindest eine der Hülsen (11a, 11b) einen hiermit einstückigen Griffteil (23) umfasst; wobei der Griffteil (23) die Drehung der Hülsen (11a, 11b) gegenüber der Achse (a) ermöglicht.

9. Strebe (10) nach den Ansprüchen 5 oder 6 oder einem hiervon abhängigen Anspruch, **dadurch gekennzeichnet, dass** die Befestigungseinrichtungen (19; 28) mit elastischen Einrichtungen (20; 29) zum Verhindern eines zufälligen Herausziehens der Befestigungseinrichtungen aus ihren jeweiligen Sitzen versehen sind.

10. Strebe (10) nach Anspruch 3 und irgendeinem hierauf zurückbezogenen Anspruch, **dadurch gekennzeichnet, dass** die erste eine kontinuierliche Längeneinstellung ermöglichende Einrichtung (16, 21) einen ersten Sitz (21c) für ein Kugelgelenk (22) umfasst, und dass die zweite eine kontinuierliche Längeneinstellung ermöglichende Einrichtung (25, 30a) einen zweiten Sitz (30c) einschließt, wobei der erste Sitz (21c) und der zweite Sitz (30c) jeweils einen jeweiligen Bolzen (P2, P1) aufnehmen.

## Revendications

1. Tirant (10) pour un dispositif d'attelage (100) pour la fixation d'outils agricoles à un tracteur ; le tirant (10) étant substantiellement symétrique par rapport à un axe de symétrie (a) longitudinal, et comprenant un système pour le réglage de sa longueur sur ledit axe (a) ; comprenant deux dispositifs de réglage de longueur infinie (16, 21a ; 25, 30a) ; lesdits deux dispositifs de réglage de longueur infinie (16, 21a ; 25, 30a) étant disposés de part et d'autre d'un membre diviseur (12) positionné transversalement par rapport audit axe (a) ; **caractérisé en ce que** ledit système comprend également des moyens de réglage de longueur discrets (26a-26f, 27a-27d, 28).

2. Tirant (10) selon la revendication 1, **caractérisé en ce que** ledit tirant (10) est un tirant stabilisateur (10) et dans lequel, l'un des deux dits dispositifs de réglage de longueur infinie (16, 21a; 25, 30a) peut flotter.

3. Tirant (10) selon la revendication 1 ou 2, **caractérisé en ce qu'**il comprend une première douille (11a) et une deuxième douille (11b) séparées par le membre diviseur (12) ; ladite première douille (11a) abritant un premier membre tubulaire (15) comprenant un premier dispositif de réglage de longueur infinie (16, 21a), et ladite deuxième douille (11b) abritant un deuxième membre tubulaire (24) comprenant un dispositif de réglage de longueur infinie (25, 30a).

4. Tirant (10) selon la revendication 3, **caractérisé en ce que** ledit tirant (10) est un tirant stabilisateur (10) ; ledit premier membre tubulaire (15) étant capable de flotter librement à l'intérieur de ladite première douille (11a).

5. Tirant (10) selon la revendication 4, **caractérisé en ce que** ledit premier membre tubulaire (15) peut être fixé sélectivement à ladite première douille (11a) par des moyens de fixation (17, 18, 19).

6. Tirant (10) selon l'une quelconque des revendication 3 à 5, **caractérisé en ce que** la position dudit deuxième membre tubulaire (24) à l'intérieur de ladite deuxième douille (11b) est réglable axialement et discrètement par des moyens de fixation (26a-26f, 27a-27d, 28).

7. Tirant (10) selon l'une quelconque des revendication 3 à 6, **caractérisé en ce que** ledit premier dispositif de réglage de longueur infinie (16, 21a) comprend un filet opposé à celui dudit deuxième dispositif de réglage de longueur infinie (25, 30a).

8. Tirant (10) selon la revendication 7, **caractérisé en ce qu'**au moins l'une desdites douilles (11a, 11b) comprend un membre de saisie (23) qui en fait partie intégrante ; ledit membre (23) facilitant la rotation desdites douilles (11a, 11b) par rapport audit axe (a).

9. Tirant (10) selon les revendications 5 ou 6, ou toute revendication en dépendant, **caractérisé en ce que** lesdits moyens de fixation (19 ; 28) sont dotés de moyens élastiques (20 ; 29) pour empêcher le retrait accidentel des moyens de fixation de leurs sièges respectifs.

10. Tirant (10) selon la revendication 3 et toute revendication en dépendant, **caractérisé en ce que** le premier dispositif de réglage de longueur infinie (16, 21a) comprend un premier siège (21c) pour un joint sphérique (22) et le deuxième dispositif de réglage de longueur infinie (25, 30a) comprend un deuxième siège (30c) ; le premier siège (21c) et le deuxième siège (30c) abritant chacun une broche correspondante (P2, P1).
